# EUROPÄISCHE PATENTANMELDUNG

(11) **EP 0 669 694 A1**
(43) Veröffentlichungstag der Anmeldung: **30.08.1995**
(21) Anmeldenummer: 95810077.8
(22) Anmeldetag: 06.02.1995
(51) Int. Cl.: H02K 3/50

(54) **Vorrichtung zur Halterung der Windungsenden einer Statorwicklung in einer dynamoelektrischen Maschine**

(30) Priorität: 26.02.1994 DE 4406400
(71) Anmelder: ABB Management AG, CH-5401 Baden (CH)
(72) Erfinder: Zimmermann, Hans, CH-8617 Mönchaltorf (CH)

(57) **Zusammenfassung**

Die Wickelkopfabstützung eines Turbogenerators umfasst einen Innenring (12), der sich unmittelbar oder unter Einschaltung einer Zwischenlage (14) an die sich hohlkegelartig erweiternden Windungsenden der Statorwicklung (4,5) anschmiegt, und eine mehrteilige, Ringe (9,27) und Tragwinkel (7) umfassende Aussenabstützung. Die Tragwinkel (7) sind an der Stirnseite der Statorpressplatte (3) des Blechkörpers befestigt. Der erste aus Isoliermaterial bestehende Aussenring (9) schmiegt sich aussen an die freien Enden der Tragwinkel (7) an. Der zweite Aussenring (27) ist aus hochfestem unmagnetischen Stahl gefertigt und stützt sich auf einer Schulter (26) an der Statorpressplatte (3) ab. und ist an den Tragwinkeln (7) befestigt. Zwischen den nach innen weisenden Flächen (18,19) der Tragwinkel (7) und den Wicklungsenden sind Doppelkeil-Spannmittel (16,17,20).

Durch die Abstützung des zweiten Aussenrings (27) auf der Schulter (26) der Statorpressplatte (3) kann er sich nur in sich dehnen, nicht aber zu einem Oval verformen. Damit wird die Wickelkopfabstützung radial sehr steif und erfüllt alle Anforderungen der Praxis, insbesondere auch im Kurzschlussfall.

## Beschreibung

### TECHNISCHES GEBIET

Die Erfindung bezieht sich auf eine Vorrichtung zur Halterung der Windungsenden einer Statorwicklung in einer dynamolelektrischen Maschine, umfassend einen Rotor und einen Stator und ein Statorgehäuse, welcher Stator einen Blechkörper mit endseitigen Statorpressplatten aufweist, und im Blechkörper in Nuten eine Unter- und Oberstäbe aufweisende Statorwicklung angeordnet ist, deren Enden den Blechkörper axial überragen, welche Halterung einen Innenring, der sich unmittelbar oder unter Einschaltung einer Zwischenlage an die sich hohlkegelartig erweiternden Windungsenden der Statorwicklung anschmiegt, und eine mehrteilige, Ringe und Tragwinkel umfassende Aussenabstützung aufweist, welche Tragwinkel an der Stirnseite des Blechkörpers befestigt sind.

Die Erfindung nimmt dabei Bezug auf einen Stand der Technik, wie er sich beispielsweise aus der EP-A-0 432 720 bzw. der inhaltgleichen US-A-5,140,740 ergibt.

### TECHNOLOGISCHER HINTERGRUND UND STAND DER TECHNIK

Die Befestigung der Wicklungsenden der Statorwicklungen (Wickelkopf) von Turbogeneratoren stellt infolge der grossen Beanspruchungen, welchen diese Wickelköpfe ausgesetzt sind, gewisse Probleme. Diese Beanspruchungen haben ihre Ursache in elektromagnetischen Kraftwirkungen, insbesondere bei Kurzschluss, in Schwingungserscheinungen und in unterschiedlichen Wärmedehnungen der Statorstäbe gegenüber dem Statoreisen während des Betriebes. Diese Belastungen führen früher oder später zu Lockerungen und Abrieberscheinungen, die schlussendlich zu Erd- und Kurzschlüssen führen.

Zur Verbesserung der Festigkeit der Wickelköpfe von grossen elektrischen Maschinen wurde eine Reihe von Systemen eingeführt, die mehrheitlich mit einteiligen Ringen aus Isoliermaterial als zentralem Abstützelement arbeiten.

Bei der Vorrichtung zur Halterung der Windungsenden einer Statorwicklung in einer elektrischen Maschine nach der DE-OS 16 13 125 schmiegt sich ein Aussenring von aussen an einen Teil der äusseren Lagen der Windungsenden an. Ein Innenring, der unabhängig vom Aussenring ist, greift an die inneren Lagen der Windungsenden an. Um die gegenseitige axiale Verschiebung der beiden Ringe zu unterbinden, sind als C-förmige Bügel ausgebildete Vorrichtungen , welche die Windungsenden umgreifen, zur Verbindung der beiden Bügel vorgesehen. Die beiden Ringe sind mit axial verlaufenden Halterungen verschraubt, die ihrerseits an der Stirnseite des Statorblechkörpers befestigt sind.

Die Wickelkopfhalterung nach der US-PS 48 00 314 verwendet nur einen Aussenring. Die Wickelkopfenden sind gruppenweise unter sich verkeilt und verklebt und an diesen Aussenring mittels Bändern angebunden.

Eine weitere, insbesondere für das Retrofit vorgesehen Lösung des Abstützproblemes ist Gegenstand der US-A-5,140,740 bzw. der inhaltsgleichen EP-A-0 432 720. Die dort vorgeschlagene Halterung weist einen Innenring auf, der sich an die sich hohlkegelartig erweiternden Windungsenden der Statorwicklung anschmiegt. Die Aussenabstützung besteht aus einem mindestens zweiteiligen Ring oder in Umfangsrichtung verlaufenden und untereinander verbundenen Abstützbalken.

Zuganker, die am Innenring und Aussenring bzw. den Abstützbalken angreifen, dienen zur Verspannung von Innenring und Aussenabstützung. Alternativ können beim Bekannten der Aussenring und die Zuganker entfallen (Fig.4). Dann stützt sich der Innenring samt den Stirnbügeln des Wickelkopfes unter Zwischenschaltung von Spannkeilen an Trägern ab, die an der Stirnseite des Statorblechkörpers befestigt sind.Nachteilig ist bei beiden Alternativen, dass sie bei Lockerwerden des Wickelkopfverbandes nur mit viel Aufwand nachspannbar sind.

Allen bekannten Ausführungsformen gemeinsam ist, dass die Aussenabstützung mit Ringen erfolgt. Derartige Ringe weiten sich sich unter Einwirkung der umlaufenden elektromagetischen Kräfte auf, werden zu Ovalen und können somit ihre Abstützfunktion nur teilweise erfüllen.

### KURZE DARSTELLUNG DER ERFINDUNG

Ausgehend vom Stand der Technik liegt der Erfindung die Aufgabe zugrunde, eine Halterung der eingang genannten Gattung zu schaffen, die wirtschaftlich und einfach herstellbar ist, allen Betriebsbeanspruchungen der genannten Art zuverlässig standhält und insbesondere nach eventuellen Lockerungen im Wickelkopfverband nachspannbar ist.

Diese Aufgabe wird erfindungsgemäss dadurch gelöst, dass ein erster Aussenring vorgesehen ist, der sich aussen an die freien Enden der Tragwinkel anschmiegt, dass ein zweiter Aussenring vorgesehen ist, der sich zumindest teilweise auf einer Schulter an der Statorpressplatte abstützt, dass der zweite Aussenring an den Tragwinkeln befestigt ist, und dass zwischen den nach innen weisenden Flächen der Tragwinkel und den Wicklungsenden Spannmitteln vorgesehen sind.

Die Anordnung und Befestigung der beiden Aussenringe führt in Kombination mit dem Innenring und den Spannmitteln zu einer schwingungsfesten Wickelkopfkonstruktion. Durch die Abstützung des zweiten Aussenrings an der Statorpressplatte kann sich dieser bei radial nach aussen wirkender Belastung im Kuerschlussfall praktisch nicht aufweiten. Er lässt sich bis zur Streckgrenze belasten. Damit werden radiale Schwingungskomponenten auf sehr kleine Amplituden begrenzt. Von dieser Tatsache "profitiert" auch der erste Aussenring. Seine Ovalisierung wird durch die radial sehr steifen Tragwinkel begrenzt. Weil nun die Aussenabstützung des Wickelkopfes sehr steif ist, gestaltet sich die eigentliche Verkeilung der Wicklungsstäbe sehr einfach: nach Einpressen des Innenrings und dessen axiale Sicherung werden die zwischen den Wicklungsstäben angeordneten Spannmittel aktiviert. Auf diese Weise wird der gesamte Wickelkopfverband zu einem extrem schwingsarmen Gebilde, das allen Betriebsbeanspruchungen, insbesondere auch im Kurzschlusfall, standhält. Eine zusätzlich Abstützung am Statorgehäuse ist grundsätzlich nicht notwendig. Sie kann jedoch als zusätzliche Massnahme in Betracht gezogen werden und ist einfach zu realisieren, z.B. durch radial nach innen verlaufende, in Axialrichtung weiche Blattfedern, die einerseits am ersten Aussenring und andererseits am Statorgehäuse befestigt sind.

Vorzugsweise liegt bei einer besonderen Ausgestaltung der Erfindung der zweite Aussenring nicht mit seinem gesamten Innenumfang sondern nur mit einem Teil seiner Breite (typisch 1/5 bis 1/3 der Ringbreite) auf einer Schulter an der Statorpressplatte auf. Diese Auflagefläche hat sich als ausreichend gezeigt.

Bei grossen elektrischen Maschinen, insbesondere solchen mit grosser Länge treten unvermeidliche thermisch bedingte axiale Relativbewegungen zwischen den Wicklungsenden und dem Statorblechkörper auf. Ohne besondere Vorkehrungen würden diese den Wicklelkopfverband unnötig beanspruchen. Aus diesem Grunde ist bei einer vorteilhaften Weiterbildung der Erfindung vorgesehen, die Tragwinkel unter Zwischenschaltung einer axial wirkenden Blattfeder an der Stirnseite des Blechkörpers zu befestigen und zwischen dem zweiten Aussenring und der Stirnfläche der Statorpressplatte Federmittel vorzusehen. Die genannten axialwirkenden Blattfedern erzeugen zusammen mit diesen Federmitteln, z.B. Tellerfederpakete eine ausreichend hohe axiale Vorspannkraft. Diese wirkt zwischen Wickelkopf und Statorblechkörper und kompensiert die thermisch bedingte axiale Verschiebung des Wickelkopfes gegenüber dem Statorblechkörper. Auf diese Weise ist die gesamte Statorwicklung mit beiden Wickelköpfen elastisch federnd gegenüber dem Statorblechkörper eingespannt, und die thermisch bedingten Dehnungen führen nicht zu einer Lockerung des Verbandes. Hierbei sind Federwege von mehreren Millimetern ausreichend.

Die Erfindung sowie weitere damit erzielbare Vorteile werden nachstehend anhand eines in der Zeichnung dargestellten Ausführungsbeispieles näher erläutert.

### KURZE BESCHREIBUNG DER ZEICHNUNG

In der Zeichnung ist ein Ausführungsbeispiel der Erfindung schematisch dargestellt, und zwar zeigt:
- Fig.1: Einen vereinfachten Längsschnitt durch die nichtantriebsseitige Endpartie eines Turbogenerators;
- Fig.1A: das Detail X aus Fig.1
- Fig.2: eine stark vereinfachte Ansicht auf die Stirnseite des Stators;
- Fig.3: einen Teilweise Schnitt durch die federnde Befestigung der Tragwinkel an der Statorpressplatte gemäss Fig.1 längs deren Linie AA.

### WEGE ZUR AUSFÜHRUNG DER ERFINDUNG

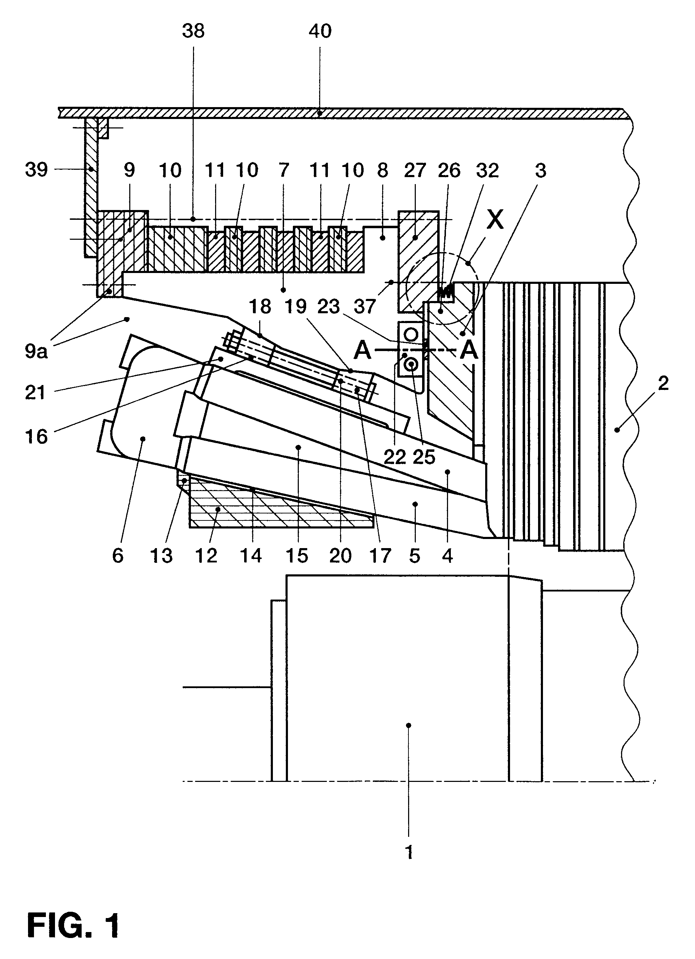

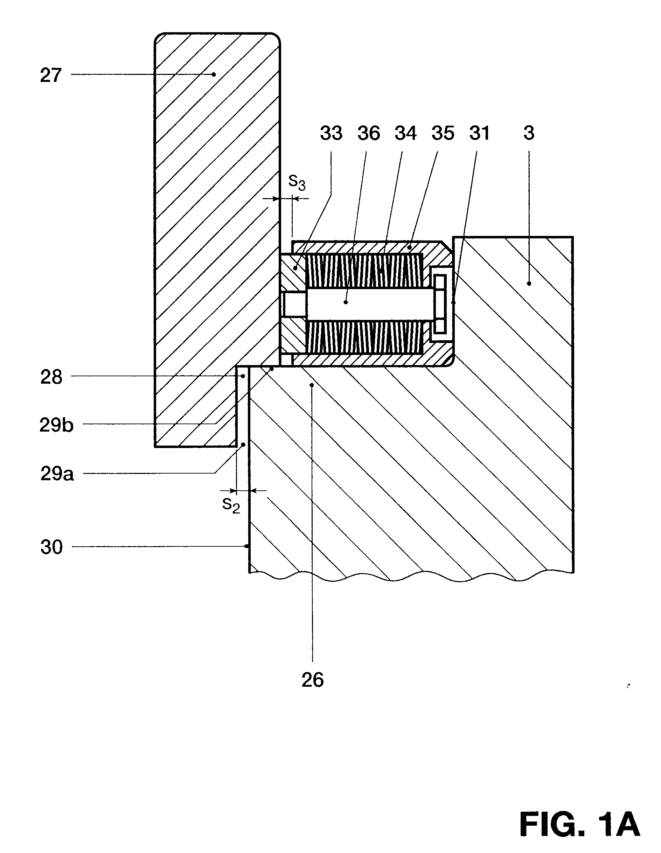

Im vereinfachten Längsschnitt durch die nicht-antriebsseitige Endpartie (NS-Seite oder Erregerseite) - eines Turbogenerators gemäss Fig.1 ist mit ber Bezugsziffer 1 ein Rotor, mit 2 ein Statorblechkörper, mit 3 seine Pressplatte bezeichnet. Die Statorwicklung besteht aus einem Unterstab 4 und einem Oberstab 5, deren aus dem Statorblechkörper 2 herausragende Enden, die sogenannten Stirnbügel, Mittels Oesen 6 miteinander elektrisch und mechanisch verbunden sind. Die Gesamtheit aller Stirnbügel bildet den Wickelkopf.

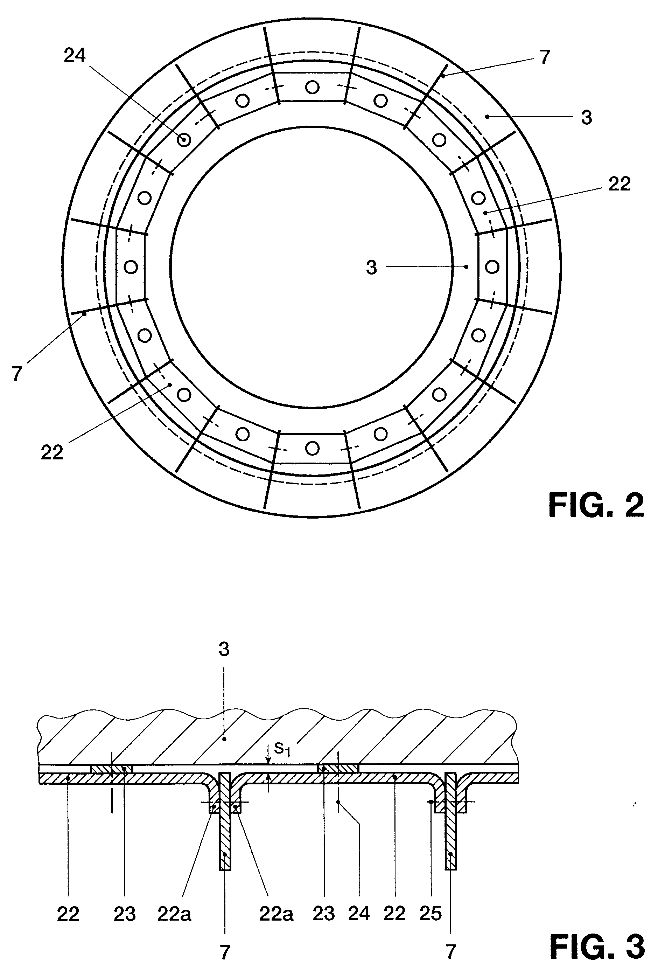

Zur Aussenabstützung des Wickelkopfes sind an der Statorpressplatte 3 befestigte Tragwinkel 7 vorgesehen, dren Verteilung aus Fig.2 hervorgeht. Diese Weise an ihrem statorseitigen Ende eine radiale Verlängerung 8 auf. Ein im Querschnitt L-förmiger einteiliger Ring 9 aus Isoliermaterial, im folgenden erster Aussenring genannt, schmiegt sich von aussen an die freien Enden der Tragwinkel 7 an. Der erste Aussenring ist an seinem radial nach innen weisenden Schenkel 9a an der Stirnfläche des Tragwinkels 7 befestigt. Der Raum zwischen dem ersten Ring und der radialen Verlängerung 8 am Tragwinkel 7 dient zur Aufnahme der durch Distanzklötze 10 getrennten Ringleitungen 11.

In den hohlkegelartig sich erweiternden Raum, der durch die Oberstäbe 5 begrenzt ist, ist ein Innenring 12 aus Isoliermaterial, z.B. glasfaserverstärktem Kunststoff, eingesetzt und mittels Sicherungen 13 axial gesichert. Die Unterstäbe 4 der Statorwicklung stützen sich unter Zwischenschaltung einer isolierenden Zwischenlagen 14, z.B. aus Glasmatte oder Glasvlies, am Innenring 12 ab. Zwischen Unter- und Oberstäbe 4 bzw. 5 sind über nahezu die gesamte axiale Ausladung des Wickelkopfes verteilt keilförmige Füllstücke 15 aus Isoliermaterial eingelegt.

Die Verkeilung der Unter- und Oberstäbe erfolgt durch eine Doppelkeilanordnung mit relativ zueinander verschiebbaren, mit Gewindebohrungen versehenen Keilen 16, 17 mit gegenläufigen Keilflächen. Diese wirken mit gleichfalls gegenläufigen Keilflächen 18,19 am Tragwinkel 7 zusammen. Mittels eines Schraubenbolzens 20 lassen sich die beiden Keile zusammenspannen. Eine Zwischenlage 21 aus Isoliermaterial verhindert die Beschädigung der Isolation des Unterstabes 4. Durch Anziehen des Bolzen wird die aus Zwischenlage 21, Unterstab 4, Füllstück 15, Oberstab 5 und Zwischenlage 14 bestehende Anordnung gegen Tragwinkel 7 und Innenring 12 verspannt.

Wie bereits eingangs ausgeführt, treten im Betrieb des Turbogenerators, insbesondere in der Anlaufphase und bei Maschinen mit grosser Länge, thermisch bedingte Relativbewegungen zwischen der (aus isolierten Kupferleitern bestehenden) Statorwicklung 4,5 und dem Statorblechkörper 2 auf. Dies bedeutet, dass der Wickelkopfverband nicht starr an der Stirnseite des Statorblechkörpers 2 befestigt werden darf, weil ansonsten Lockerungen im Wickelkopfverband und auch Beschädigungen der Leiterisolation auftreten können. Aus diesem Grunde sind die Tragwinkel 7 nicht direkt, sondern unter Zwischenschaltung von Ausgleichselementen an der Stirnfläche des Statorblechkörpers 2, genauer an der Statorpressplatte 3 befestigt. Im Beispielsfall sind U-förmige Laschen 22 vorgesehen, die in Laschenmitte unter Zwischenschaltung einer Distanzscheibe 23 an der Statorpressplatte 3 mittels Schrauben 24 befestigt sind, so dass sich ein Spalt S₁ ergibt. In den Zwischenraum zwischen die Schenkel 22a in Umfangsrichtung benachbarter Laschen 22 sind die Tragwinkel 7 eingeschoben und dort mittels Schrauben 25 und Muttern befestigt. Die pressplattenseitigen Enden der Tragwinkel reichen dabei nicht bis zur Stirnfläche der Statorpressplatte. Auf diese Weise wirken die Laschenteile beidseits der Distanzscheiben 23 als axial wirkende Blattfedern und erlauben eine Relativbewegung zwischen den Tragwinkeln 7 und der Statorpressplatte 7 und damit dem Statorblechkörper 2. Dieser Federweg ist in Richtung zum Statorblechkörper 2 hin durch die Dicke der Distanzscheiben 23 bestimmt.

Diese Flexibilität würde ohne zusätzlich Abstützmassnahmen nun die Steifigkeit des gesamten Wickelkopfverbandes vermindern. Hier setzt nun die Erfindung ein. Die Statorpressplatte 7 ist erfindungsgemäss am äusseren Umfang auf ihrer dem Statorblechkörper 2 abgewandten Seite mit einer Schulter 26 versehen, auf der ein zweiter Aussenring 27 zumindest teilweise aufliegt (vgl. Fig.1 und das Detail X gemäss Fig.1A). Der Aussenring besteht aus hochfestem unmagnetischem Stahl, wie er auch für Rotorkappen verwendet wird. Er ist am Innenumfang mit einer Eindrehung 28 versehen. Zwischen der radial verlaufenden Fläche 29a dieser Eindrehung 28 und der Stirnfläche 30 der Statorpressplatte 3 verbleibt ein Spalt S₂, der mindestens so gross ist wie der Spalt S₁ zwischen Laschen 22 und Statorpressplatte 3.

Zwischen der statorblechkörperseitigen Stirnfläche des zweiten Aussenringes 27 und der radial verlaufenden Fläche 31 der Schulter 26 an der Pressplatte 3 sind generell mit der Bezugsziffer 32 bezeichnete Federmittel angeordnet, deren Aufbau aus dem Detailbild gemäss Fig.1A hervorgeht. Sie sind gleichmässig über den gesamten Ringumfang verteilt. An die besagte Stirnfläche am zweiten Aussenring 27 ist eine Ringmutter 33 befestigt. Ueber ein Tellerfederpaket 34 ist eine Kappe 35 gestülpt und mittels einem Schraubenbolzen 36 am zweiten Aussenring 27 axial beweglich verschraubt und damit vorgespannt. Der Spalt S₃ zwischen der Kappe 35 ist gleich oder nur wenig grösser als der Spalt S₂ zwischen den Flächen 29a und 30.

Der zweite Aussenring 27 ist an den Tragwinkeln 7 mittels Schraubbolzen 37 befestigt. Der erste Aussenring 9 ist mittels Zugbolzen 38 mit dem zweiten Aussenring 27 verspannt. Diese Konstruktion erlaubt in Grenzen axiale Bewegungen des gesamten Wickelkopfverandes relativ zum Statorblechkörper entgegen der Federkraft der axialen Blattfedern (U-förmige Laschen 22) und der Blattfederpakte 34, ist jedoch radial extrem steif, weil der zweite Aussenring 27 - bedingt durch seine Auflage auf der Schulter 26 - sich nur dehnen, im Kurzschlussfall aber nicht ovalisieren kann.

Eine noch weitergehend radiale Versteifung des Wickelkopfes lässt sich erzielen, wenn - wie in Fig.l gezeigt - der erste Aussenring 9 mittels radial verlaufender Laschen 39 am Statorgehäuse 40 befestigt ist. Diese Laschen 39 wirken als axial weiche Blattfedern, sind aber radial steif. Die Laschen 39 sind gleichmässig über den Gehäuseumfang verteilt und entweder separat am ersten Aussenring 9 oder mit den Zugbolzen 38 befestigt.

### Bezeichnungsliste

- 1: Rotor
- 2: Statorblechkörper
- 3: Statorpressplatte
- 4: Unterstab
- 5: Oberstab
- 6: Oesen
- 7: Tragwinkel
- 8: radiale Verlängerung an 7
- 9: erster Aussenring
- 9a: nach innen weisender Schenkel von 9
- 10: Distanzklötze
- 11: Ringleitungen
- 12: Innenring
- 13: Sicherungen
- 14: Zwischenlagen
- 15: Füllstücke
- 16,17: Keile
- 18,19: Keilflächen an 7
- 20: Sschraubenbolzen
- 21: Zwischenlage
- 22: U-förmige Laschen
- 22a: Schenkel von 22
- 23: Distanzscheibe
- 24: Schrauben
- 21,25: Schrauben
- 22,31: Schraubbolzen
- 23: Abschluss
- 24: Axialventilator
- 25: Schaufeln von 24
- 26: Schulter an 3
- 27: zweiter Aussenring
- 28: Eindrehung an 27
- 29a,29b: radial bzw. axial verlaufende Flächen von 28
- 30: Stirnfläche von 7
- 31: radiale Fläche von 26
- 32: Federmittel
- 33: Ringmutter
- 34: Tellerfederpaket
- 35: Kappe
- 36,37,41: Schraubenbolzen
- 38: Zugbolzen
- 39: radial nach innen weisende Laschen an 40
- 40: Statorgehäuse
- 4x: Zugbolzen
- S₁: Spalt zwischen 3 und 22
- S₂: Spalt zwischen 27 und 3
- S₃: Spalt zwischen 27 und 35

## Patentansprüche

1. Vorrichtung zur Halterung der Windungsenden einer Statorwicklung in einer dynamolelektrischen Maschine, umfassend einen Rotor (1) und einen Stator und ein Statorgehäuse, welcher Stator einen Blechkörper (2) mit endseitigen Statorpressplatten (3) aufweist und im Blechkörper (2) in Nuten eine Unter- (4) und Oberstäbe (5) aufweisende Statorwicklung angeordnet ist, deren Enden den Blechkörper (2) axial überragen, welche Halterung einen Innenring (12), der sich unmittelbar oder unter Einschaltung einer Zwischenlage (14) an die sich hohlkegelartig erweiternden Windungsenden der Statorwicklung anschmiegt, und eine mehrteilige, Ringe (9,27) und Tragwinkel (7) umfassende Aussenabstützung aufweist, welche Tragwinkel (7) an der Stirnseite der Statorpressplatte (3) des Blechkörpers befestigt sind, dadurch gekennzeichnet, dass ein erster Aussenring (9) vorgesehen ist, der sich aussen an die freien Enden der Tragwinkel (7) anschmiegt, dass ein zweiter Aussenring (27) vorgesehen ist, der sich auf einer Schulter (26) an der Statorpressplatte (3) abstützt, dass der zweite Aussenring (27) an den Tragwinkeln (7) befestigt ist, und dass zwischen den nach innen weisenden Flächen (18,19) der Tragwinkel (7) und den Wicklungsenden Spannmittel (16,17,20) vorgesehen sind.

2. Vorrichtung nach Anspruch 1, dadurch gekennzeichnet, die Tragwinkel (7) unter Zwischenschaltung einer Blattfeder (22) an der Stirnseite des Blechkörpers (2) befestigt sind.

3. Vorrichtung nach Anspruch 2, dadurch gekennzeichnet, dass die Blattfedern durch U-förmige Laschen (22) gebildet sind, die im mittleren Laschenabschnitt unter Zwischenschaltung einer Distanzscheibe (23) am Statorblechkörper (2) befestigt sind, und dass die Tragwinkel (7) an den Schenkeln (22a) der U-förmigen Laschen (22) befestigt sind.

4. Vorrichtung nach einem der Ansprüche 1 bis 3, dadurch gekennzeichnet, dass axial wirkende Federmittel (32) zwischen dem zweiten Aussenring (27) und der Statorpressplatte (3) vorgesehen sind.

5. Vorrichtung nach Anspruch 4, dadurch gekennzeichnet, dass die Federmittel gleichmässig über den Ringumfang verteilte Tellerfederpakte (34) umfassen, die von je einer Kappe (25) umfasst sind, welche Kappen axial verschiebbar am zweiten Aussenring (27) befestigt sind.

6. Vorrichtung nach einem der Ansprüche 1 bis 5, dadurch gekennzeichnet, dass der zweite Aussenring (27) am Innenumfang eine Eindrehung (28) mit einer radial verlaufenden Fläche (29a) aufweist, die zwischen sich und der Stirnfläche (30) der Statorpressplatte (3) einen Spalt (S₂) freilässt, während die andere Fläche (29b) direkt auf der Schulter (26) der Statopressplatte (3) aufliegt.

7. Vorrichtung nach einem der Ansprüche 1 bis 6, dadurch gekennzeichnet, dass die Spannmittel eine Doppelkeilanordnung (16,17) mit gegenläufigen Keilflächen aufweist, die mit gegenläufigen Keilflächen (18,19) an den Tragwinkeln (7) zusammenwirken.
